Europäisches Patentamt

European Patent Office

Office européen des brevets

(19)

(11) Publication number: **0 042 769**
**B1**

(12) **EUROPEAN PATENT SPECIFICATION**

(45) Date of publication of patent specification: **25.01.84**

(51) Int. Cl.³: **B 27 G 5/02**

(21) Application number: **81302867.7**

(22) Date of filing: **25.06.81**

(54) **Mitre block.**

(30) Priority: **25.06.80 GB 8020828**

(43) Date of publication of application:
**30.12.81 Bulletin 81/52**

(45) Publication of the grant of the patent:
**25.01.84 Bulletin 84/4**

(84) Designated Contracting States:
**DE FR GB**

(56) References cited:
**US - A - 1 521 908**
**US - A - 1 718 791**
**US - A - 2 518 801**
**US - A - 2 799 077**
**US - A - 2 875 796**
**US - A - 3 837 253**

(73) Proprietor: **UNILEVER PLC**
**Unilever House Blackfriars  P O Box 68**
**London EC4P 4BQ (GB)**

(84) **GB**

(73) Proprietor: **UNILEVER NV**
**Burgemeester s'Jacobplein 1 P.O. Box 760**
**NL-3000 DK  Rotterdam (NL)**

(84) **DE FR**

(72) Inventor: **O'Neill, Terence Carey**
**27 Oakley Drive Eastfield Green**
**Cramlington Northumberland (GB)**

(74) Representative: **Rogers, John Edward et al,**
**UNILEVER PLC Patents Division P.O. Box 68**
**Unilever House**
**London EC4P 4BQ (GB)**

Courier Press, Leamington Spa, England.

Mitre block

This invention relates to improvements in or relating to a mitre block.

It is known to provide a mitre block of generally 'U' shaped cross-section having guide slots extending across both of the uprights of the block. The article to be mitred is positioned in the slot formed between the uprights and a cutting implement, commonly a saw, is guided by a guiding slot in each upright to cut at the required angle (e.g. US—A—3 837 253). Such a mitre block is difficult to employ for accurate cutting with a knife, particularly one with a short rigid blade, since the handle part of the knife is obstructed by one of the uprights.

According to the present invention there is provided a mitre block having an upper surface, a receiving slot extending from edge to edge in the upper surface adapted to receive a length of the material to be cut and two guide slots at right angles to one another, the guide slots intersecting with one another and with the receiving slot at one edge of the upper surface. By providing the cutting slots at the edge of the upper surface a knife can conveniently be used as the implement for cutting the material to be mitred without the handle of the knife being obstructed by the mitre block. A handle having a relatively short and therefore more rigid blade can be employed.

Preferably two guide slots are provided at both edges of the upper surface to intersect with the longitudinal slot at both ends thereof. The mitre block can then be used with the cutting implement in either hand. A downwardly extending stop having an engagement surface parallel to the receiving slot can be provided. The engagement surface can abut the front edge of a work bench or the like to assist in holding the mitre block in a steady position to facilitate accurate cutting.

An embodiment of the invention will now be described with reference to the accompanying perspective view of a mitre block according to the invention.

The mitre block has a rectangular flat upper surface 1 in which is provided a longitudinal receiving slot 2 extending between opposite edges 3 and 4 of the upper surface. At one end of the receiving slot 2 are provided guide slots 5 and 6 at right angles to one another and each intersecting with the receiving slot at the edge of the upper surface. Similar guide slots 7 and 8 are provided at the opposite edge of the upper surface to intersect with the receiving slot at that edge. The guide slots are at 45° to the receiving slot.

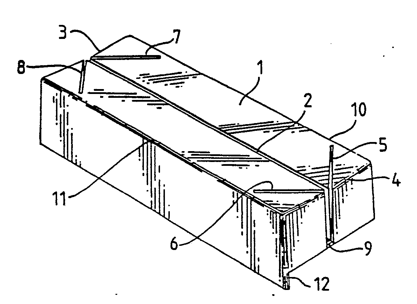

As can be seen from the drawing the receiving slot and the guide slots do not extend through the base 9 of the mitre block, since otherwise the block would no longer be in one piece. Similarly the guide slots 5, 6, 7 and 8 do not extend to the longitudinal edges 10 and 11 of the upper surface parallel to the receiving slot.

A downwardly extending stop in the form of a continuous flange 12 is provided parallel to the receiving slot to extend beyond the base 9 of the block.

In use the article to cut with a mitred end is positioned in the receiving slot. The receiving slot can be dimensioned to suit the size of particular articles to be cut so that the article is a push fit in the slot.

The block can then be held by hand with the flange 12 engaging e.g. the front edge of a work bench or table and a hand held knife guided by one of the slots 5, 6, 7 or 8 to cut a mitred end on the article. If the knife is held in the right hand the slots 5 and 6 can be used to cut opposite mitres at opposite ends of a length of material, the material being reversed end for end in the receiving slot for each cut.

If the knife is held in the user's left hand the slots 7 and 8 can be used more conveniently in the same way.

Whichever guide slot is used the mitre block does not impede the free use of the knife due to obstruction with the handle of the knife.

The mitre block of the present invention can be of solid construction but may be conveniently be moulded of plastics materials having the slots formed in hollow ribs extending downwardly from the upper surface.

**Claims**

1. A mitre block having an upper surface (1), a receiving slot (2) extending from edge (3) to edge (4) in the upper surface adapted to receive a length of the material to be cut and two guide slots (5, 6 or 7, 8) at right angles to one another, the guide slots intersecting with one another and with the receiving slot at one edge (3 or 4) of the upper surface.

2. A mitre block according to Claim 1, in which two guide slots (5, 5 or 7, 8) are provided at both ends (3, 4) of the receiving slot (2) to. intersect therewith.

3. A mitre block according to Claim 2, in which there is provided a downwardly extending stop (12) having an engagement surface parallel to the receiving slot.

**Revendications**

1. Boîte à onglets, comportant une surface supérieure (1) une rainure de réception (2) s'étendant de bord (3) à bord (4) dans la surface supérieure, destinée à recevoir une longueur de matériau à découper, et deux fentes de guidage (5, 6 ou 7, 8) à angle droit l'une par rapport à l'autre, les fentes de guidage s'intersectant l'une l'autre et intersectant la rainure de réception sur un bord (3 ou 4) de la surface supérieure.

2. Boîte à onglets selon la revendication 1, dans laquelle deux fentes de guidage (5, 6, 7, 8) sont prévues aux deux extrémités (3, 4) de la rainure de réception (2) de manière à inersecter cette rainure.

3. Boîte à onglets selon la revendication 2, dans laquelle il est prévu une butée (12) se prolongeant vers le bas, comportant une surface d'engagement parallèle à la rainure de réception.

## Patentansprüche

1. Gehrungslade mit einer oberen Fläche (1), einem sich von Rand (3) zu Rand (4) in der oberen Fläche erstreckenden Aufnahmeschlitz (2) zur Aufnahme einer Länge des zu schneidenden Materials und zwei zueinander rechtwinkeligen Führungsschlitzen (5, 6 oder 7) 8), wobei die Führungsschlitze einander und den Aufnahmeschlitz an einem Rand (3 oder 4) der oberen Fläche schneiden.

2. Gehrungslade nach Anspruch 1, bei der zwei Führungsschlitze (5, 6; 7, 8) an beiden Enden (3, 4) des Aufnahmeschlitzes (2) vorgesehen sind und diesen schneiden.

3. Gehrungslade nach Anspruch 2, bei der ein sich abwärts erstreckender Anschlag (12) mit einer zum Aufnahmeschlitz parallelen Anschlagfläche vorgesehen ist.